# FASCICULE DE BREVET EUROPEEN

(11) **EP 2 653 690 B1**
(45) Date de publication et mention de la délivrance du brevet: **18.03.2015**
(21) Numéro de dépôt: 13305323.1
(22) Date de dépôt: 19.03.2013
(51) Int. Cl.: F02B 25/04, F02B 31/06, F02B 25/02

(54) **Moteur deux temps, notamment de type Diesel, avec balayage de gaz brûlés de la chambre de combustion et procédé de balayage pour un tel moteur**
Zweitaktmotor, insbesondere von Diesel-Typ, mit Spülung der Abgas vom der Brennkammer und ein Verfahren für einen solchen Motor
Two-stroke engine, in particular of Diesel type, with exhaust gas purging of the combustion chamber and a method for such a motor

(30) Priorité: 19.04.2012 FR 1201158
(43) Date de publication de la demande: 23.10.2013
(73) Titulaire: IFP Energies nouvelles, 92852 Rueil-Malmaison Cedex (FR)
(72) Inventeur: Ambrazas, Didier, 94260 FRESNES (FR); Charmasson, Sebastien, 91400 ORSAY (FR); Laget, Olivier, 92500 RUEIL-MALMAISON (FR); Ternel, Cyprien, 78210 SAINT CYR L'ECOLE (FR); Thiriot, Julien, 92500 RUEIL MALMAISON (FR)

(56) Documents cités:
- DE-A1- 19 755 689
- DE-A1-102010 038 192
- GB-A- 1 571 256

## Description

La présente invention se rapporte à un moteur à combustion interne fonctionnant selon un cycle à deux temps avec balayage des gaz brûlés résiduels contenus dans sa chambre de combustion et à un procédé de balayage pour un tel moteur.

Elle concerne plus particulièrement mais non exclusivement un moteur deux temps de type Diesel.

Comme cela est connu, un moteur deux temps comprend un cylindre comportant des canaux d'admission avec des lumières d'admission qui débouchent dans la chambre de combustion de ce moteur et au moins un moyen d'échappement qui permet d'évacuer les gaz brûlés résultant de la combustion d'un mélange carburé. Cette chambre est délimitée par la paroi du cylindre sur laquelle arrivent les lumières, le haut d'un piston qui coulisse dans ce cylindre en un mouvement rectiligne alternatif entre un point mort haut et un point mort bas, et la partie de la culasse qui ferme le haut du cylindre.

Cette culasse porte le moyen d'échappement qui comprend une tubulure d'échappement contrôlée par une soupape d'échappement.

Dans le cas d'un moteur avec injection directe de carburant, comme un moteur Diesel, cette culasse porte également un injecteur de carburant permettant d'introduire ce carburant dans la chambre de combustion.

Généralement, la puissance délivrée par ce moteur est dépendante de la quantité d'air introduite dans sa chambre de combustion, quantité d'air qui est elle-même proportionnelle à la densité de cet air.

La quantité d'air admise dans la chambre de combustion au travers des lumières est donc augmentée par compression de l'air, comme par un turbocompresseur ou un compresseur entraîné, au préalable de son admission dans cette chambre de combustion.

De manière à pouvoir encore plus augmenter cette quantité d'air dans la chambre de combustion du cylindre, il est prévu d'évacuer les gaz brûlés résiduels contenus initialement dans la chambre de combustion pour les remplacer par de l'air comprimé (ou air suralimenté).

Cette étape est plus communément appelée balayage des gaz brûlés et se réalise généralement au début de la phase d'admission du moteur en réalisant un court-circuitage entre l'admission et l'échappement.

Plus précisément, au voisinage de la fin de la phase de combustion/détente du moteur, c'est-à-dire lorsque le piston est au voisinage du point mort bas et qu'il recouvre les lumières, la soupape d'échappement est commandée en ouverture pour évacuer les gaz d'échappement contenus dans la chambre de combustion.

En continuant sa course vers le point mort bas, le piston découvre les lumières d'admission. De l'air suralimenté est donc introduit dans la chambre de combustion en repoussant les gaz d'échappement vers la soupape d'échappement qui est ouverte.

Après que le piston ait atteint le point mort bas, la soupape d'échappement est fermée et l'admission de l'air comprimé se poursuit jusqu'à ce que le piston obstrue les lumières d'admission de manière à ce que la phase compression de cet air puisse se réaliser.

Bien que donnant satisfaction, ce dispositif présente néanmoins des inconvénients non négligeables.

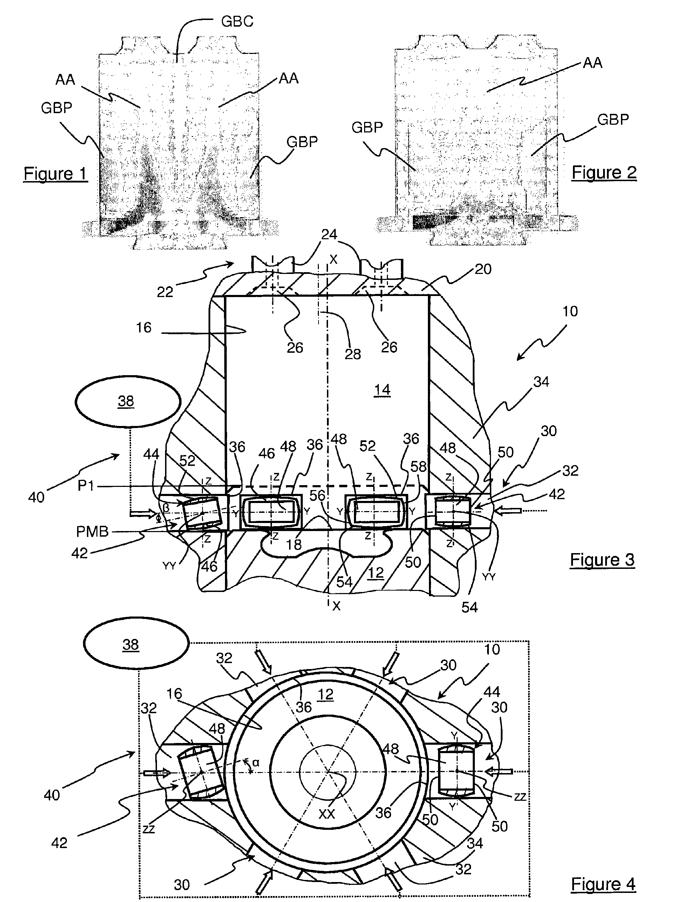

En effet, comme cela est mieux visible sur les figures 1 et 2 qui montrent des exemples de cartographie en composition (gaz brûlés/air frais d'admission) d'un moteur deux temps résultant de tests et de calculs réalisés par le demandeur, des gaz brûlés sont confinés au centre de la chambre (voir référence GBC de la figure 1) que l'air suralimenté ne réussit pas à balayer (voir référence AA de la figure 1) et/ou une poche de gaz brûlés est piégée sur la périphérie de la chambre de combustion vers le bas de cette chambre (voir référence GBP des figures 1 et 2) et qui n'est également pas balayée par l'air d'admission AA.

Par cela, la chambre de combustion n'est pas complètement remplie d'air d'admission, ce qui ne peut que perturber le déroulement souhaité de la combustion tout en diminuant les performances de ce moteur.

Pour obtenir un balayage optimum, il est connu par le brevet GB 437584 de munir le cylindre de deux types de canaux d'admission qui comportent un décalage angulaire axial opposé de l'un de ces types par rapport à l'autre et qui s'étendent sur deux niveaux.

Par l'intermédiaire de l'un de ces types de canaux, l'air d'admission balaye la périphérie interne du cylindre pour évacuer les gaz brûlés qui y sont présents vers le moyen d'échappement. Par l'autre de ces types, l'air d'admission qui pénètre dans la chambre de combustion est dévié par une surface déflectrice présente sur le haut du piston pour diriger le flux d'air d'admission sensiblement au centre de la chambre de combustion pour y balayer les gaz brûlés résiduels.

Ce dispositif a pour inconvénients majeurs de nécessiter différents types de canaux de directions inclinées, ce qui ne peut que compliquer la réalisation du cylindre et augmenter son coût tout en étant inefficace à certains régimes ou sur certains points de fonctionnement du moteur.

De plus, le haut du piston comporte une surface déflectrice qui demande une réalisation spécifique pour obtenir l'orientation souhaitée.

En outre, cette surface déflectrice perturbe d'une façon non négligeable le déroulement de la combustion du mélange carburé et peut introduire des points de chauffe importants pouvant mettre en péril l'intégrité du piston.

La présente invention se propose de remédier aux inconvénients ci-dessus grâce à un moteur qui permet de balayer les gaz brûlés résiduels, à tous les régimes, de manière efficace de façon à obtenir un rendement élevé tout en étant d'une conception simple et peu coûteuse.

A cet effet, la présente invention concerne un moteur à combustion interne de type deux temps comportant au moins un cylindre avec une chambre de combustion, au moins un moyen d'échappement avec une tubulure d'échappement contrôlée par une soupape d'échappement, des canaux d'admission d'air dans lesquels circule de l'air suralimenté d'admission et débouchant dans ladite chambre par des lumières et comportant des moyens mobiles d'orientation multidirectionnelle du flux d'air suralimenté vers la chambre de combustion, caractérisé en ce que les moyens mobiles d'orientation multidirectionnelle comporte une buse mobile angulairement.

Les moyens mobiles d'orientation multidirectionnelle peuvent être placés à proximité des lumières.

Les moyens mobiles d'orientation multidirectionnelle peuvent comporter une buse en forme de rotule aplatie.

La buse peut comporter un alésage pour la circulation de l'air suralimenté vers la chambre de combustion.

L'alésage peut comporter une section semblable à celles des lumières.

L'invention concerne également un procédé de balayage des gaz brûlés résiduels contenus dans la chambre de combustion d'un moteur à combustion interne de type deux temps, ledit moteur comportant au moins un cylindre, au moins un moyen d'échappement avec une tubulure d'échappement contrôlée par une soupape d'échappement, des canaux d'admission d'air dans lesquels circule de l'air suralimenté d'admission et débouchant dans ladite chambre par des lumières, caractérisé en ce qu'il consiste à guider dans des directions multiples le flux d'air suralimenté circulant dans les canaux pour l'introduire dans la chambre de combustion.

Le procédé peut consister à diriger le flux d'air suralimenté tangentiellement par rapport à la paroi interne du cylindre.

Le procédé peut consister à diriger le flux d'air suralimenté axialement par rapport à l'axe longitudinal du cylindre.

Les autres caractéristiques et avantages de l'invention vont apparaître maintenant à la lecture de la description qui va suivre, donnée à titre uniquement illustratif et non limitatif, et à laquelle sont annexées :
- la figure 3 qui montre un moteur deux temps en coupe axiale partielle avec balayage de gaz brûlés selon l'invention; et
- la figure 4 qui montre ce moteur en coupe radiale partielle.

Sur les figures 3 et 4, le moteur à combustion interne deux temps comporte au moins un cylindre 10 d'axe XX à l'intérieur duquel coulisse un piston 12 en un mouvement rectiligne alternatif.

Ce cylindre comporte une chambre de combustion 14 délimitée par la paroi interne 16 du cylindre, le haut 18 du piston 12 et la partie de la culasse 20 qui ferme le haut du cylindre.

La culasse porte au moins un moyen d'échappement de gaz brûlés 22 provenant de la combustion d'un mélange carburé dans la chambre de combustion. Ce moyen comporte une tubulure d'échappement 24 arrivant dans la chambre de combustion et contrôlée par une soupape d'échappement 26. Dans l'exemple décrit, il est prévu quatre moyens d'échappement régulièrement répartis circonférentiellement.

Comme cela est généralement connu, les soupapes d'échappement suivent une course d'ouverture/fermeture de la tubulure sous l'impulsion de moyens de commande, comme un arbre à came, un vérin de type électrique, électrohydraulique, ...

Dans le cas d'un moteur deux temps avec injection directe de carburant, tel qu'un moteur de type Diesel, un injecteur de carburant (symbolisé par le trait d'axe 28) est porté par cette culasse pour introduire du carburant dans la chambre de combustion.

Bien entendu et cela sans sortir du cadre de l'invention, la culasse peut également porter un moyen d'allumage du mélange carburé comme une bougie à étincelle (non représentée) pour l'utilisation d'un moteur deux temps à allumage commandé.

Le cylindre 10 comporte au moins un moyen d'admission d'air 30 pour amener de l'air suralimenté à l'intérieur de la chambre de combustion pour y réaliser un mélange carburé.

Dans l'exemple illustré sur les figures, six moyens d'admission sont prévus en étant répartis régulièrement circonférentiellement à 60°.

Ce moyen d'admission comprend un canal d'admission d'air 32 sensiblement horizontal qui est prévu dans la paroi 34 du cylindre 10 et qui débouche par une lumière 36 dans la chambre de combustion du moteur et au dessus du haut 18 du piston lorsque celui-ci est en position de point mort bas. Ces canaux sont en section de forme quadrilatérale, ici rectangulaire avec les grands côtés du rectangle sensiblement horizontaux, mais toute autre forme est envisageable comme une forme circulaire.

Ces canaux sont alimentés en air par un moyen de compression 38, comme un compresseur entraîné de type à lobes ou un turbocompresseur, de façon à introduire de l'air comprimé (ou air suralimenté) dans ces canaux par un dispositif de distribution d'air suralimenté 40.

Comme mieux visible sur les figures, les canaux 32 sont munis, au voisinage des lumières 36, de moyens mobiles d'orientation 42 du flux d'air vers la chambre de combustion.

Plus précisément, ces moyens comportent une buse 44 mobile angulairement sous forme de rotule aplatie. Cette buse comporte un corps 46 dans lequel est réalisé un alésage 48 débouchant sur deux faces planes verticales 50 sensiblement parallèles l'une à l'autre et octogonales à l'alésage. Cet alésage est de forme semblable à celle du canal 32 et présente donc une section rectangulaire. Cet alésage est, en position de repos de la buse, de direction générale confondue avec celui du canal 32 (voir partie droite des figures 1 et 2). Le corps de la buse porte également deux portées sphériques convexes opposées, une supérieure 52 et une inférieure 54 en regard des grands côtés de l'alésage ainsi que deux autres portées sphériques convexes 56 et 58 en vis-à-vis des petits côtés du canal.

Ces portées sphériques prennent appui directement sur les côtés du canal, comme illustré sur les figures, en prévoyant un dispositif d'étanchéité à l'air (non représenté) entre les portées sphériques et les côtés du canal, comme des portées sphériques concaves complémentaires portées par ces cotés.

Ainsi, la buse est montée fixement dans le canal mais est mobile en rotation dans toutes les directions.

Pour assurer cette mobilité multidirectionnelle la buse est reliée à un dispositif de commande (non représenté) qui permet de faire pivoter cette buse autour d'un axe de rotation YY sensiblement orthogonal à celui de l'axe longitudinal XX du cylindre (voir la partie gauche de la figure 3) et/ou autour d'un autre axe de rotation ZZ qui est sensiblement parallèle à celui du cylindre (voir partie gauche de la figure 4).

Bien entendu, il est à la portée de l'homme du métier d'envisager tous les dispositifs de commande qui permettent de réaliser cette mobilité, comme des micromoteurs électriques avec leurs rotors reliés aux axes de rotation de la buse, et dont la mise en action et le contrôle seront assurés par le calculateur que comporte ce moteur.

De même, il peut être envisagé que les buses soient commandées indépendamment les unes des autres, ou alors suivre la même commande.

Ainsi, en fonctionnement pendant la phase de combustion/détente du moteur, le piston 12 arrive à la position P1 indiqué sur la figure 3 en masquant les lumières 36 des canaux 32.

A cette position, les soupapes d'échappement 26 s'ouvrent de manière à laisser s'échapper les gaz brûlés contenus dans la chambre 14 par les tubulures d'échappement 24 et le piston 12 continue sa course vers le point mort bas PMB.

Pendant cette course, les lumières sont progressivement découvertes par le piston et de l'air suralimenté est introduit dans la chambre de combustion 14 en traversant les alésages 48 des buses 44. L'air introduit permet de repousser les gaz brûlés encore présents dans la chambre de combustion vers les soupapes d'échappement 26 pour les évacuer par les tubulures 24.

En fonction des conditions de fonctionnement du moteur, le calculateur commandera alors le dispositif de commande des buses 44 de façon à ce que ces buses puissent assurer le balayage des gaz brûlés résiduels en partie centrale de la chambre de combustion 14 et/ou en partie périphérique.

Plus précisément, la buse est commandée en rotation pour former un angle non nul a, dans le sens horaire ou antihoraire, avec un plan vertical passant par l'axe XX du cylindre et l'axe de rotation ZZ (figure 4) pour diriger le flux d'air suralimenté au voisinage de la paroi 16 du cylindre en créant une circulation sensiblement circonférentielle de ce flux d'air (dans le sens horaire ou antihoraire). Ceci permet d'assurer ainsi le balayage de la poche de gaz brûlés piégée sur la périphérie de la chambre de combustion 14.

Le fait de créer un angle α plus ou moins important avec ces buses va permettre d'orienter le flux d'air correctement dans le cylindre en fonction du point de fonctionnement, mais il va aussi permettre d'ajuster le niveau du tourbillon circulaire autour de l'axe XX, ou swirl, dans le moteur. Ce niveau de swirl représente l'intensité avec laquelle l'air aura un mouvement circulaire dans le cylindre.

Ce swirl est nécessaire pour améliorer l'homogénéité du mélange air/carburant, mais il doit être aussi limité. En effet, trop de swirl peut, dans certains cas, nuire au bon rendement de la combustion, et peut même augmenter générer une mauvaise combustion du mélange carburé avec la production de fumée.

Cette buse peut aussi être commandée en rotation pour former un angle non nul β, dans le sens antihoraire, avec un plan horizontal passant par l'axe de rotation YY de la buse (figure 3). Cette inclinaison permet ainsi de diriger le flux d'air suralimenté sortant de la buse vers l'axe XX en partie centrale du cylindre 10 avec une circulation quasiment axiale pour y repousser les gaz brûlés vers les soupapes d'échappement.

Bien étendu et cela sans sortir du cadre de l'invention, les angles d'inclinaison α et p peuvent être maintenus fixes tout au long de la course du piston entre les points P1 et PMB ou être progressivement variables entre ces deux points.

Ainsi, la buse peut être inclinée d'un angle α pour le balayage périphérique des gaz brûlés contenus dans le cylindre ou d'un angle β pour le balayage en partie centrale de ce cylindre ou à la fois d'un angle α et β pour le balayage périphérique et central des gaz brûlés résiduels.

Dès que l'étape de balayage est terminée, généralement à quelques degrés d'angle de vilebrequin avant le point mort bas du piston, les soupapes sont commandées en fermeture et l'introduction dans la chambre de combustion de l'air suralimenté se poursuit jusqu'au point mort bas du piston pour poursuivre le remplissage en air suralimenté de la chambre de combustion.

A partir de ce point, le piston a une course inverse vers son point mort haut en recouvrant progressivement les lumières jusqu'à les masquer complètement à sa position P1.

Ainsi, grâce aux buses, le balayage peut être optimisé en fonction du point de fonctionnement et une grande majorité de gaz brûlés résiduels est évacuée de la chambre de combustion pour être remplacés par de l'air suralimenté.

De ce fait, la quantité d'air contenu dans la chambre de combustion est augmentée et les performances du moteur sont alors améliorées.

## Revendications

1. Moteur à combustion interne de type deux temps comportant au moins un cylindre (10) avec une chambre de combustion (14), au moins un moyen d'échappement (22) avec une tubulure d'échappement (24) contrôlée par une soupape d'échappement (26), des canaux d'admission d'air (32) dans lesquels circule de l'air suralimenté d'admission et débouchant dans ladite chambre par des lumières (36) et comportant des moyens mobiles d'orientation multidirectionnelle (42) du flux d'air suralimenté vers la chambre de combustion (14),**caractérisé en ce que** les moyens mobiles d'orientation multidirectionnelle comporte une buse (44) mobile angulairement.

2. Moteur selon la revendication 1, **caractérisé en ce que** les moyens mobiles d'orientation multidirectionnelle sont placés à proximité des lumières (36).

3. Moteur selon l'une des revendications précédentes, **caractérisé en ce que** les moyens mobiles d'orientation multidirectionnelle comporte une buse (44) en forme de rotule aplatie.

4. Moteur selon l'une des revendications précédentes, **caractérisé en ce que** la buse (44) comporte un alésage (48) pour la circulation de l'air suralimenté vers la chambre de combustion.

5. Moteur selon l'une des revendications précédentes, **caractérisé en ce que** l'alésage (48) comporte une section semblable à celles des lumières (36).

6. Procédé de balayage des gaz brûlés résiduels contenus dans la chambre de combustion (14) d'un moteur à combustion interne de type deux temps, ledit moteur comportant au moins un cylindre (10), au moins un moyen d'échappement (22) avec une tubulure d'échappement (24) contrôlée par une soupape d'échappement (26), des canaux d'admission d'air (32) dans lesquels circule de l'air suralimenté d'admission et débouchant dans ladite chambre par des lumières (36), **caractérisé en ce qu'**il consiste à guider dans des directions multiples le flux d'air suralimenté circulant dans les canaux pour l'introduire dans la chambre de combustion.

7. Procédé de balayage des gaz brûlés selon la revendication 6, **caractérisé en ce qu'**il consiste à diriger le flux d'air suralimenté tangentiellement par rapport à la paroi interne (16) du cylindre.

8. Procédé de balayage des gaz brûlés selon l'une des revendications 6 ou 7, **caractérisé en ce qu'**il consiste à diriger le flux d'air suralimenté axialement par rapport à l'axe longitudinal (XX) du cylindre.

## Patentansprüche

1. Zweitaktverbrennungsmotor, umfassend mindestens einen Zylinder (10) mit einer Verbrennungskammer (14), wenigstens ein Auslassmittel (22) mit einer Auslassleitung (24) gesteuert durch ein Auslassventil (26), Luftzufuhrleitungen (32) in denen Ladeluft zirkuliert und die in die Brennkammer mittels Öffnungen (36) münden, weiter umfassend bewegliche multidirektionale Orientierungsmittel (42) des Ladeluftstromes in die Verbrennungskammer (14), **dadurch gekennzeichnet, dass** die beweglichen multidirektionalen Orientierungsmittel eine bewegliche gewinkelte Düse (44) aufweisen.

2. Motor gemäß Anspruch 1, **dadurch gekennzeichnet, dass** die beweglichen multidirektionalen Orientierungsmittel in der Nachbarschaft der Öffnungen (36) angeordnet sind.

3. Motor gemäß einem der vorhergehenden Ansprüche, **dadurch gekennzeichnet, dass** die beweglichen multidirektionalen Orientationsmittel eine Düse (44) in Form einer abgeplatteten Kugelform umfassen.

4. Motor gemäß einem der vorherigen Ansprüche, **dadurch gekennzeichnet, dass** die Düse (44) eine Bohrung (48) aufweist, um die Ladeluft in Richtung der Brennkammer zirkulieren zu lassen.

5. Motor gemäß einer der vorhergehenden Ansprüche, **dadurch gekennzeichnet, dass** die Bohrung (48) einen Querschnitt umfasst, der ähnlich zu dem der Öffnungen (36) ist.

6. Verfahren zur Spülung der Residual-Abgase in einer Brennkammer (14) eines Zweitaktverbrennungsmotors, wobei besagter Motor wenigstens einen Zylinder (10), wenigstens ein Auslassmittel (22) mit einer Auslassleitung (24) aufweist, letztere gesteuert durch ein Auslassventil (26), Luftzufuhrkanäle (32), in denen Ladeluft zirkuliert und die in der besagten Brennkammer mittels Öffnungen (36) endend ist, **dadurch gekennzeichnet, dass** es daraus besteht, Ladeluft, die in den Leitungen zirkuliert, in eine Vielzahl von Richtungen zu leiten, um sie in die Brennkammer einzuführen.

7. Verfahren zur Abgasspülung gemäß Anspruch 6, **dadurch gekennzeichnet, dass** es daraus besteht, den Ladeluftfluss tangential im Verhältnis zur Innenwand (16) des Zylinders zu führen.

8. Verfahren zur Gassteuerung gemäß Anspruch 6 oder 7, **dadurch gekennzeichnet, dass** es daraus besteht, den Ladeluftfluss axial im Verhältnis zur Längsachse (XX) des Zylinders zu leiten.

## Claims

1. A two-stroke type internal-combustion engine comprising at least one cylinder (10) with a combustion chamber (14), at least one exhaust means (22) with an exhaust manifold (24) controlled by an exhaust valve (26), air intake channels (32) wherein supercharged intake air circulates and which open into said chamber through ports (36), comprising mobile means (42) for multi-directional orientation of the supercharged air stream into combustion chamber (14), **characterized in that** the mobile multi-directional orientation means comprise an angularly mobile nozzle (44).

2. An engine as claimed in claim 1, **characterized in that** the mobile multi-directional orientation means are arranged close to ports (36).

3. An engine as claimed in any one of the previous claims, **characterized in that** the mobile multi-directional orientation means comprise a nozzle (44) in form of a flat eyeball.

4. An engine as claimed in any one of the previous claims, **characterized in that** nozzle (44) comprises a bore (48) for circulation of the supercharged air to the combustion chamber.

5. An engine as claimed in any one of the previous claims, **characterized in that** bore (48) comprises a section similar to the section of ports (36).

6. A method of scavenging residual burnt gas contained in combustion chamber (14) of a two-stroke type internal-combustion engine, said engine comprising at least one cylinder (10), at least one exhaust means (22) with an exhaust manifold (24) controlled by an exhaust valve (26), air intake channels (32) wherein supercharged intake air circulates and which open into said chamber through ports (36), **characterized in that** it consists in guiding in multiple directions the supercharged air stream circulating in the channels so as to drive it into the combustion chamber.

7. A burnt gas scavenging method as claimed in claim 6, **characterized in that** it consists in driving the supercharged air stream tangentially with respect to inner wall (16) of the cylinder.

8. A burnt gas scavenging method as claimed in any one of claims 6 or 7, **characterized in that** it consists in driving the supercharged air stream axially with respect to longitudinal axis (XX) of the cylinder.
